# EUROPEAN PATENT APPLICATION

(11) **EP 4 534 384 A1**
(43) Date of publication of application: **09.04.2025**
(21) Application number: 24183452.2
(22) Date of filing: 20.06.2024
(51) Int. Cl.: B62B 7/14, B62B 9/12, A47D 13/02, A47D 9/00

(54) **DEVICE FOR RECEIVING A CHILD WITH HEIGHT ADJUSTMENT MEANS**

(30) Priority: 20.06.2023 CN 202321590383 U
(71) Applicant: Dorel France, 49309 Cholet Cedex (FR)
(72) Inventor: OLFERS, Dennis, 5595 AV Leende (NL); ZWEIDECK, Bruno, 49300 Cholet (FR)
(74) Representative: Vidon Brevets & Stratégie

(57) **Abstract**

A device (1) for carrying a child in a lying or seated position, which can be selectively mounted on a stroller frame and set over a planar surface, comprising a main body for receiving a child and first securing means (4) able to cooperate with complementary second securing means mounted or formed on said frame, comprising height adjustment means (5) for adjusting the height of the position of said first securing means(4) with respectto a lower surface of said receiving element, between two extreme height positions, so-called high position and low position.

## Description

### Field of the Invention

The present invention relates to children's products, and in particular to child-carrying devices, such as carrycots, hammocks, shells and child seats, which can be attached to a baby carriage, or pushcart or stroller, frame.

### Background of the Invention

It is known to equip baby carriage frames with removable child-carrying devices, enabling several types of device to be used on the same baby carriage, depending on the needs and age of the child, and to use the device independently of the frame, for example on the seat of a vehicle, on a fixed support or placed on the ground.

Notably, the carrycots are for carrying a baby from birth to about 15 months old. Parents using a carrycot to carry the babies out is safer and more comfortable for the baby and is more convenient for the parents. A carrycot can be secured to the seat of a vehicle or to a pushcart, and can also be carried around with a parent.

In conventional carrycots, the height and/or inclination of the headrest can be adjusted to increase the comfort of the baby when laying down. However, the installation of these carrycots generally cannot be adjusted, and the parent or the adult in charge of the baby needs to bend down when putting the baby in or carrying the baby out. In the course of putting the baby in or carrying the baby out of the carrycot, the guardian may have bend over excessively, which may which can lead to uncomfortable positions and even back injuries. This problem is accentuated by the fact that the people using the stroller can be of very different heights.

It may also be advisable to adjust the height of the child-carrying device so that it can be placed high enough, particularly in the street and in potentially polluted areas.

These disadvantages, described here for a carrycot, apply equally to other child-carrying devices.

To this end, it has been proposed to equip baby carriage frames with means for adjusting the height of the device's securing element. In this way, the device can be positioned at different heights in relation to the chassis. This solution is described, for example, in patent documents EP199254 or US8128119.

However, this approach has several drawbacks. Firstly, it requires all chassis to be fitted with height-adjustment elements, even when this function is not useful or desired, which introduces unnecessary complexity and additional cost. Moreover, a specific solution has to be developed for each new stroller frame.

The present invention is developed to overcome the disadvantages of the current technology.

### Summary of the Invention

The objective of the present invention is to provide a child-carrying device overcoming the disadvantages mentioned above.

The technical solution adopted by the present invention to solve its technical problems is a device for carrying a child in a lying or seated position, which can be selectively mounted on a stroller frame and set over a planar surface, comprising a main body for receiving a child and first securing means able to cooperate with complementary second securing means mounted or formed on said frame.

According to the invention, the device comprises height adjustment means for adjusting the height of the position of said first securing means with respect to a lower surface of said receiving element, between two extreme height positions, so-called high position and low position.

Thus, according to the invention, it is the device that carries all the adjustment means, and not the frame. The latter is therefore easy to produce and does not require specific height adjustment means.

According to a particular embodiment, said first and second securing means can be assembled and/or disassembled only in at least one predetermined position of said first securing means.

Notably, said predetermined position(s) may be such that, when the device is set on a planar surface, said first securing means does not interfere with said planar surface. Installing the adjusters on the device itself is interesting but can have a drawbackwhen the device is separated from the frame: the height adjustment means can interfere with the floor, impairing the stability of the device and the comfort of the child, and risking damaging them. According to a particular embodiment, said predetermined position is said low position. According to a particular embodiment, each of said height adjustment means comprises two complementary elements for locking in one of said height positions, a first locking element being fixed with respect to said lower surface and a second locking element being slidably mounted relative to said first locking element.

Notably, said second locking element can comprise a plurality of recesses, corresponding to each of said height positions, and in that said first locking elements comprises an index element, cooperating with one of said recesses depending on the selected height position. At least one unlocking actuator able to control the release of said index element can be provided, e.g. connected to each index element by a transmission cable.

According to a particular embodiment, each of said locking elements comprises a release button, which can assume a release position, allowing the device to be removed from the frame, and a rest position, in which said index element is accommodated in one of said recesses.

Accordingto a particular embodiment, said release button can take on said release position only when said first securing means are in said predetermined position(s).

According to a particular embodiment, release button is formed on the upper part second locking element, with return means tending to return it to its rest position.

In this case, said button can be extended by a plate having a plurality of positioning slots adapted to receive said locking index, cooperating with a rib of said second element to prevent displacement of the release button when said first securing means are not in said predetermined position(s), said plate not extending opposite said locking index in said predetermined position(s).

According to a particular embodiment, said element for receiving a child is foldable, and in that said first securing means are movable in rotation so as to substantially align with said receiving element in its folded state.

Thus, according to a particular embodiment, the main body comprising a first securing element comprising a height adjustment means connected to the locking part of the first securing element in a liftable manner, the height adjustment means comprising an unlocking actuator and a locking index, the first securing element comprising a plurality of positioning slots which are spaced apart along the height direction and are (respectively) matched with the locking index, so that when the locking index is engaged with a positioning slot, the main body is secured at the corresponding height of the engaged positioning slot, the unlocking actuator being able to move the locking index away from the corresponding engaged positioning slot, the locking index being moved upwards and downwards with respect to the locking part of the first securing element, and being re-engaged with any positioning slots.

According to a particular embodiment, the invention relates to a device as describe above, the locking index being is connected to a first return means, making the locking index project out of the main body and be engaged with the positioning slot.

According to a particular embodiment, the invention relates to a device as described above, the main body further comprising an upper rim frame and a lower rim frame, the unlocking actuator is arranged between the upper rim frame and the lower rim frame, the locking index being retractably connected to the lower rim frame.

According to a particular embodiment, the invention relates to a device as described above, the unlocking actuator comprises an unlocking linkage assembly disposed on the upper rim frame, and a guiding assembly disposed on the lower rim frame, the locking index being connected to the guiding assembly, and the guiding assembly being driven by the unlocking linkage assembly, so that the locking index can be retracted inwards with respect to the lower rim frame, and the locking index is thus disengaged from the corresponding engaged positioning slot.

According to a particular embodiment, the invention relates to a device as described above, the unlocking linkage assembly comprising a first unlocking button movably connected to of the upper rim frame, and a fixing element connected to the first unlocking button, the first unlocking button being provided with a first guiding surface directed upwards, and the fixing element being provided with a sliding slot located above the first guiding surface, and a follower is movably connected within the sliding slot, and both sides of the follower being on the first guiding surface, the guide assembly comprising a guiding element provided within the lower rim frame, and a first driven element being connected between the follower and the guiding element, a first guiding part being provided between the guiding element and the locking index, the first unlocking button moving upward with respect to the fixing element drives the first guiding surface to move upwards with respect to the sliding slot, and to guide the follower, via the first guiding surface, to move within the sliding slot so that the follower pulls the first driven element to drive the guiding element to move upwards with respect to the locking index, and thus the locking index, guided via the first guiding part, to be retracted with respect to the lower rim frame.

According to a particular embodiment, the invention relates to a device as described above, the first unlocking button being provided with a first accommodation cavity with an opening on the top, and the fixing element extending into the first accommodation cavity through the opening, so that the sliding slot is being near and above the first guiding surface .

According to a particular embodiment, the invention relates to a device as described above, wherein a second restoring element is provided within the first accommodation cavity, the second restoring element being connected between the first unlocking button and the fixing element, for moving the first unlocking button downward with respect to the fixing element and restore the first unlocking button to its initial position.

According to a particular embodiment, the invention relates to a device as described above, wherein both sides of the opening are provided with positioning ribs respectively, and the fixing element is fixed between the two positioning ribs.

According to a particular embodiment, the invention relates to a device as described above, wherein the unlocking linkage assembly comprises an unlocking button movably connected to the upper part of the upper rim frame, a roller provided on one side of the second unlock button, a fixed bracket, and the second follower, the second unlocking button being provided within the fixed bracket in a liftable manner, the roller is rotatably disposed in the fixed bracket, the guide assembly comprising a second guide part provided on the locking index, one end of the second follower being wound around the roller and is connected to the second unlock button, and the other end being wound around the second guide part and connected to the lower rim frame.

According to a particular embodiment, the invention relates to a device as described above, that a limitation portion is provided within the fixed bracket, and the limitation portion limiting the distance of the second unlocking button moving upwards and downwards, with respect to the upper rim frame, the lower part of the second unlocking button being connected with a third restoring element, and the third restoring element being for restoring the second unlock button to its initial position.

According to a particular embodiment, the device according to the invention belongs to the group comprising nacelles, chairs, hammocks, shells, and seats for children, which can be secured to a stroller frame.

Compared with the prior art, the present invention has notably the following beneficial effects:
1. With the unlocking mechanism driving the locking index to disengage from the locking index, the user can lift the carrycot main body and drive the height adjustment means to move accordingly upwards and downwards with respective to the locking index, and by the locking index moved upwards and downwards with respective to positioning slots to engage with any positioning slot, the carrycot main body is secured at the corresponding height of the engaged positioning slot; and thus making it easier for the guardian to put the baby in or carry the baby out of the carrycot, and not to be injured easily;
2. By arranging multiple positioning slots, the locking index has the function of a multi-level height adjustment, so that the carrycot can be used in a variety of situations, and all the positioning slot is arranged in the same vertical direction, making it convenient for users to adjust the installation height of the device, e.g. a carrycot. It simplifies the operation and optimizes the user experience;
3. It is not necessary to equip or pre-equip all stroller frames with height adjusters, which are sometimes unnecessary: only the device, e.g. the canopy, is equipped with height adjustment means.

The present invention will be further described below with reference to the accompanying drawings and embodiments.

### Brief Description of the Drawings

Figure 1 is a perspective view of an embodiment of the present invention, applied to a canopy;
Figure 2 is an exploded view of the embodiment of Figure 1;
Figure 3 is a perspective view of a first embodiment of the height adjustment means according to the present invention;
Figure 4 is an exploded view of the embodiment of the height adjustment means of Figure 3;
Figure 5 is a schematic diagram of an embodiment of the connection of the unlocking button, the fixing element and the follower of the canopy of Figure 1;
Figure 6 is a cross-sectional view along line A-A in Figure 3;
Figure 7 is a schematic diagram of an embodiment of the connection of the guiding element, the locking index and the restoring element in a first embodiment of the height adjustment means of the present invention;
Figure 8 is a perspective view of a second embodiment of the height adjustment means of the present invention;
Figure 9 is an internal structural diagram of the second embodiment of the height adjustment means of Figure 8;
Figure 10 is a cross-sectional view along line B-B in Figure 9;
Figure 11 is a perspective view of the latch device of the canopy of Figure 1;
Figure 12 is a second perspective view of the locking index of the canopy of Figure 1;
Figure 13 is a schematic diagram of the connection between the first mounting part and the second mounting part of the canopy of Figure 1;
Figure 14 illustrates the different positions of the height adjustment means, in a embodiment where three positions are available;
Figures 15Ato 15C illustrates the canopy in the three positions of Figure 14;
Figure 16 is a cross-sectional view of the height adjustment means of Figure 14, in the low position;
Figure 17 is a cross-sectional view of the height adjustment means of Figure 16, in the low position, with the button pressed to release the canopy from the frame;
Figure 18 is a cross-sectional view of the height adjustment means of Figure 14, in the intermediate position;
Figure 19 is a cross-sectional view of the height adjustment means of Figure 14, in the high position;
Figure 20 is a view of the canopy of Figure 1 in a folded position.

### Description of Embodiments

The embodiments of the present invention will be described in detail below with reference to the accompanying drawings. The embodiments described here relate to a canopy, but the same or a similar approach can be implemented for any other type of child-carrying device, such as nacelles, chairs, hammocks, shells and seats for children, which can be secured to a stroller, pr pushcart, frame.

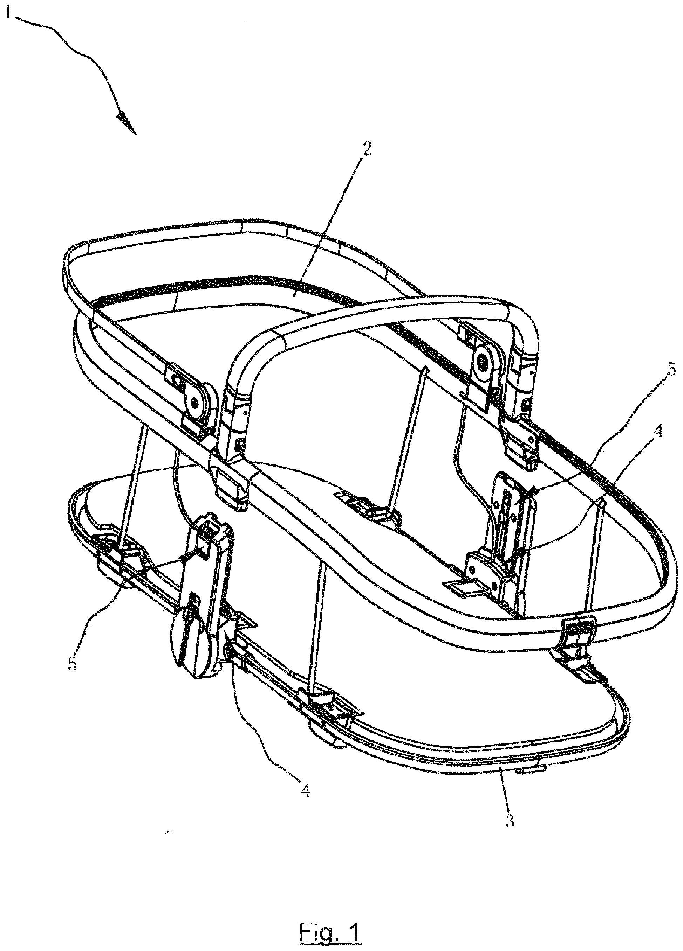

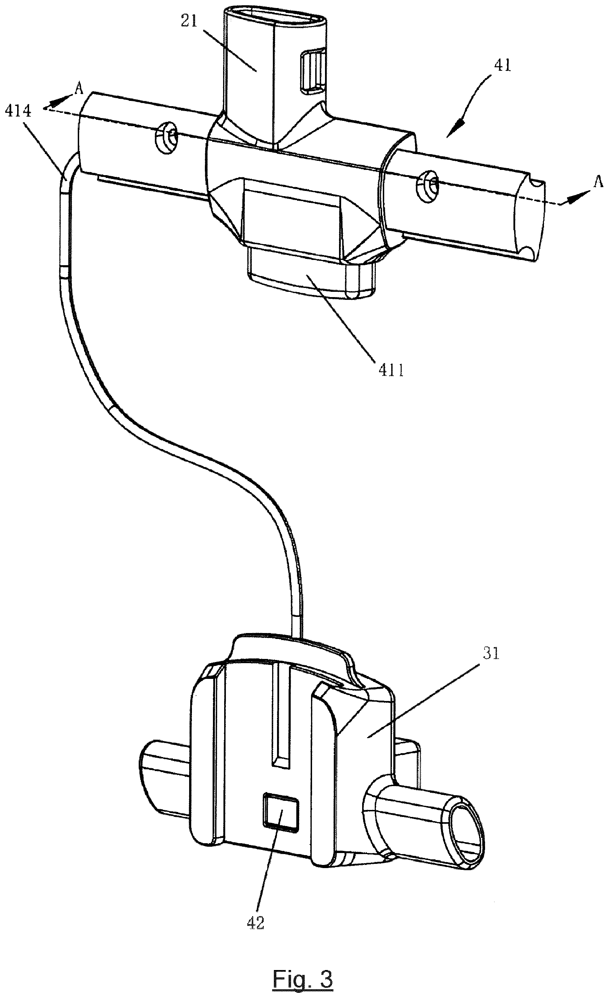

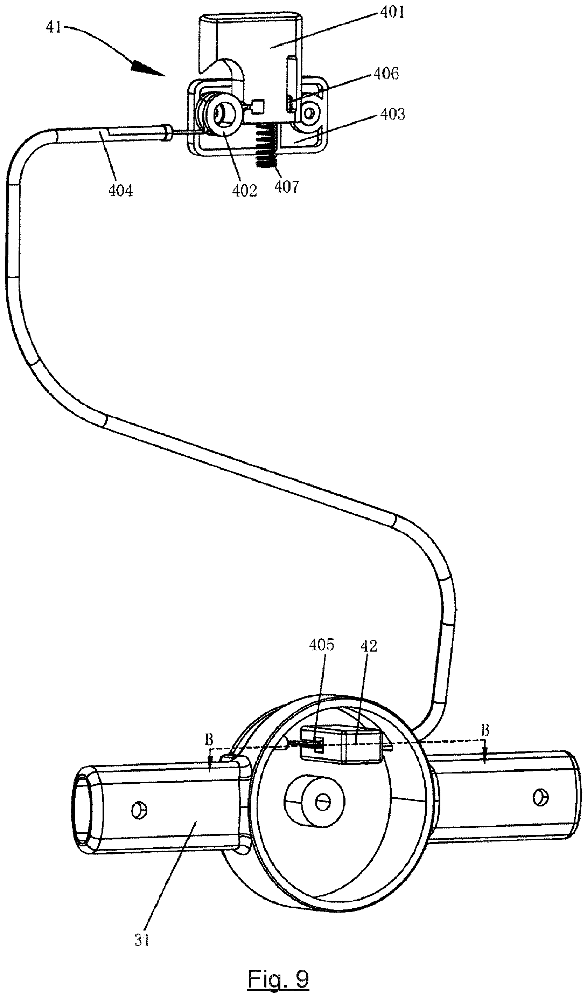

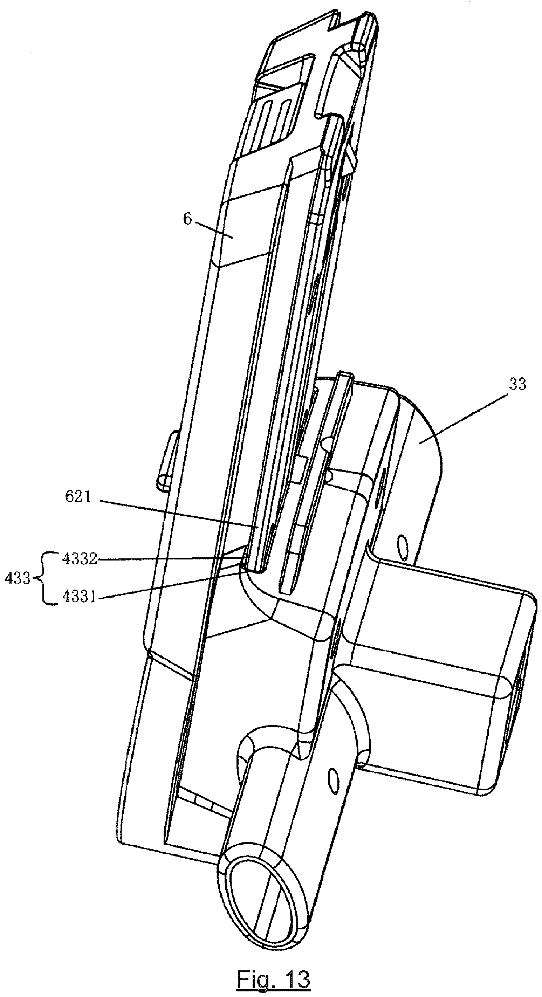

As shown in Figures 1-19, in order to improve the convenience for users to adjust the installation height of the carrycot, the present invention provides a carrycot with a height adjustment means.

### First embodiment:

As shown in Figures 1-7, the present invention provides, in a first embodiment, a carrycot with height adjustment means, comprising a main body 1. The main body 1 comprises height adjustment means 4 carrying a securing element 5. The securing element 5 is for connecting with the pushcart frame, and the height adjustment means 4 is connected to the securing element 5 in a liftable manner. The height adjustment means 4 comprises an unlocking mechanism, or unlocking actuator, 41 and a locking index 42, the securing element 5 comprises plurality positioning slots 51 which are spaced apart along the height direction and are respectively matched with the locking index 42; when the locking index 42 is engaged with a positioning slot 51, the main body 1 is secured at the corresponding height of the engaged positioning slot 51; the unlocking mechanism 41 is for moving the locking index 42 away from the corresponding engaged positioning slot 51, and the locking index 42 can be moved upwards and downwards with respect to the securing element 5, and be re-engaged with any positioning slots 51.

In this embodiment, the height adjustment means 4 are provided on the carrycot, and one side of the securing element 5 is detachably connected to the frame of a child carrier such as a pushcart, and the other side of the securing element 5 is slidably movable relative to the body of the height adjustment means 4. In a practical application, the locking index 42 is driven, by the unlocking mechanism 41, to disengage from the securing element 5. Then the user can lift the main body 1 to drive the body of the height adjustment means 4 to move upwards and downwards with respective to the securing element 5, and to make the locking index 42 move upwards and downwards with respective to positioning slots 51 till the locking index 42 being engaged with any one of the positioning slots 51, so as to secure the main body 1 at the corresponding height. It is convenient for the user to put the baby in or carry the baby out without being injured.

In addition, multiple positioning slots 51 are provided on the side of the securing element 5 opposite to the locking index 42, and the positioning slots 51 are spaced apart along the height direction of the securing element 5, By providing multiple positioning slots 51, the securing element 5 has the function of multi-level height adjustment, so that the carrycot can be used in a variety of situations. All the positioning slots 51 are arranged in the same vertical direction, which facilitates the user to adjust the installation height of the carrycot, simplifying the operation and optimizing the user experience. Preferably, at least three positioning slots 51 are provided.

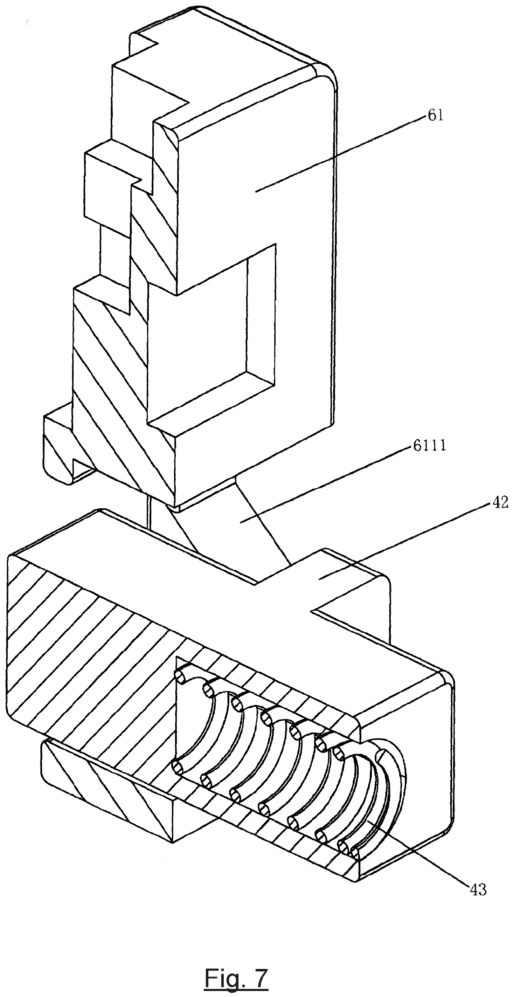

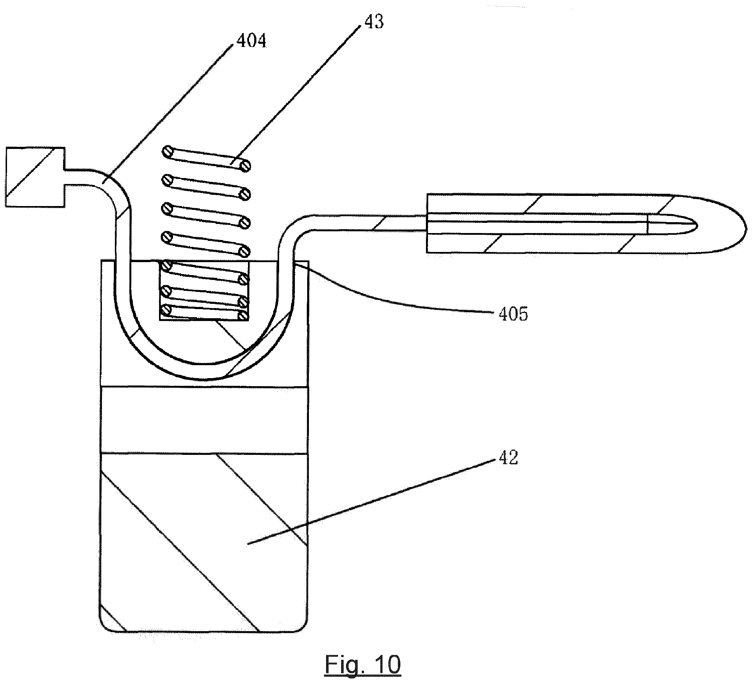

Specifically, the locking index 42 is connected to a return means, or first restoring member, 43, making the locking index 42 to be engaged with any one of the positioning slots 51 in a rest position. As shown in Figures 7 and 10, in this embodiment, after the user releases control of the unlocking mechanism 41, the locking index 42 is projected outside of the main body 1 and is engaged with any one of the positioning slots 51 by the return means 43, and the main body 1 is automatically secured at a height corresponding to the engaged positioning slot 51 without the need for additional manpower, which is convenient and fast. Preferably, the return means 43 is a spring, which is easy to obtain and has low production cost.

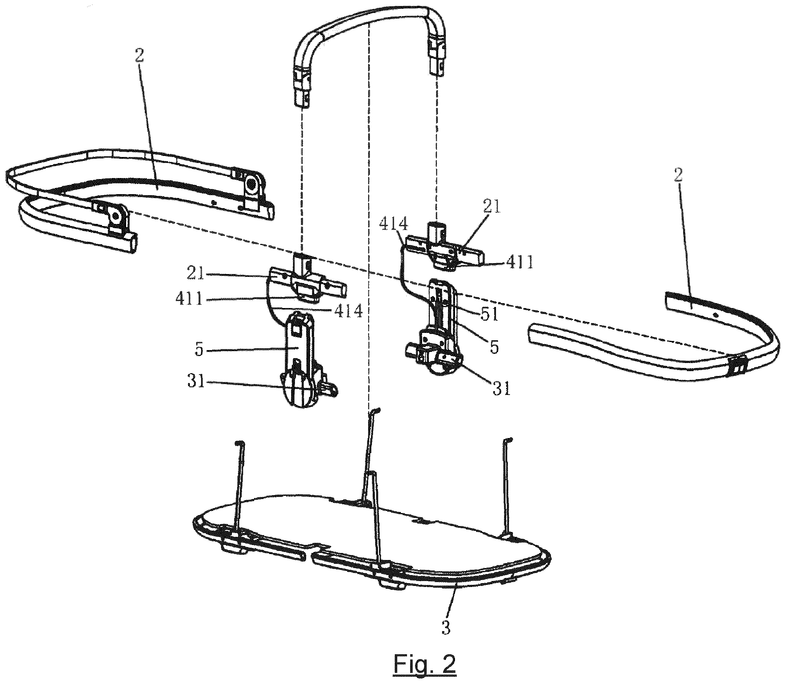

Specifically, the main body 1 further comprises an upper rim frame 2 and a lower rim frame 3. The unlocking mechanism 41 is arranged between the upper rim frame 2 and the lower rim frame 3. The locking index 42 is retractably connected to the lower rim frame 3, and the securing element 5 is opposite to the locking index 42. As shown in Figures 1 and 2, in this embodiment, the upper rim frame 2 is connected above the lower rim frame 3with foldable arms allowing to fold the main body. The peripheries of the upper rim frame 2 and the lower rim frame 3 can be connected with soft fabrics, such as cover cloths, to separate the external environment from the internal environment of the main body 1, and thus to provide a good and safe resting environment for the baby; preferably, both of the left and right sides of the upper rim frame 2 are provided with a unlocking mechanism 41and both of the left and right sides of the lower rim frame 3 are provided with a locking index 42 respectively, to ensure the balance of the main body 1 when adjusting the installation height.

Further, the unlocking mechanism 41 comprises an unlocking linkage assembly disposed on the upper rim frame 2, and a guiding assembly disposed on the lower rim frame 3, the locking index 42 is connected to the guiding assembly, and the guiding assembly is driven by the unlocking linkage assembly, so that the locking index 42 can be retracted inwards with respect to the lower rim frame 3, and the locking index 42 is thus disengaged from the corresponding engaged positioning slot 51. As shown in Figure 2, in this embodiment, the upper rim frame 2 and the lower rim frame 3 can be provided with first notches and second notches respectively, so as to install additional first connecting bracket 21 and second connecting bracket 31 respectively; the unlocking linkage assembly is provided within the first connecting bracket 21, the guiding assembly is provided within the second connecting bracket 31; and the locking index 42 can be retracted in and projected out of the second connecting bracket 31 by the guiding assembly. The first connecting bracket 21 and the second connecting bracket 31 increase the installation space for the unlocking linkage assembly and the guiding assembly, making the assembly easy.

Furthermore, the unlocking linkage assembly comprises an unlocking button 411 movably connected to the lower part of the upper rim frame 2, and a fixing element 412 attached to the first unlocking button 411, the unlocking button 411 is provided with an first guiding surface 4111 directed upwards, and the fixing element 412 is provided with a sliding slot 4121 located above the first guiding surface4111, and a follower 413is movably connected within the sliding slot 4121, and both ends of the follower 413 are on the first guiding surface 4111, the guide assembly comprises a guiding element 61 provided within the lower rim frame 3, and a first driven element 414 is connected between the follower 413 and the guiding element 61,a first guiding part 611 is provided between the guiding element 61 and the locking index 42. The unlocking button 411 moves upward with respect to the fixing element 412 so that the first guiding surface 4111 moves upwards with respect to the sliding slot 4121, and guides the follower 413, via the first guiding surface 4111, to moves within the sliding slot 4121, so that the follower 413 pulls the first driven element 414 to drive the guiding element 61 to move upwards with respect to the locking index 42, and thus the locking index 42, guided via the first guiding part 611, to be retracted with respect to the lower rim frame 3. Furthermore, the first unlocking button 411 is provided with a first accommodation cavity 4112 with an opening on the top, and the fixing element 412 extends into the first accommodation cavity 4112 through the opening, so that the sliding slot 4121 is being near and above the first guiding surface 4111.

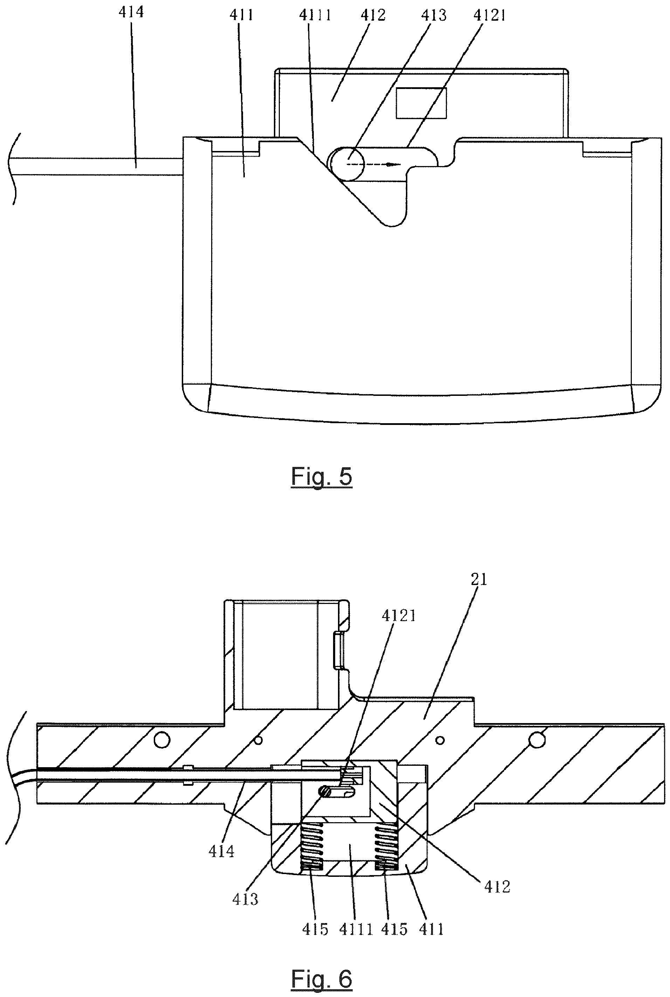

The arrow in Figure 5 indicates the moving direction of one end of the follower 413 which is guided by the first guiding surface 4111, when the unlocking button 411 is moved upwards with respective to the fixed component412. In this embodiment, during assembly, the fixing member 412 is fixed within the first connecting bracket 21, and the unlocking button 411 is slidably connected to the lower part of the fixing member 412 via the opening, The fixing element 412 extends into the first accommodation cavity 4112, and the sliding slot 4121 is arranged on the upper side of the first guiding surface 4111; the follower 413 is movably inserted into the sliding slot 4121 and both ends of the follower 413 are placed on the first guiding surface 4111. The first guiding surface 4111 is preferably a guide slope provided on the first unlock button 411. The guide slope extends obliquely downward from the top edge of the unlocking button 411, which is a simple structure and is easy to produce and implement. The follower 413 is configured as a latch, which is easy to obtain and with low production cost. In addition, the guiding element 61 is provided in the second connecting bracket 31 in a movable upwards and downwards manner, the locking index 42 being connected to the lower part of the guiding part 61. A first guiding part 611 is provided between the guide element 61 and the locking index 42. Further preferably, the first guiding part 611 comprises a second guiding surface6111 which is provided on the guiding element 61 and a third guiding surface 6112 which is provided on the locking index 42 and is corresponding to the second guide surface 6111.The second guiding surface 6111 and the third guiding surface 6112 are preferably configured as matchable guiding slopes, and via the first guiding part 611, the upwards and downwards movement of guiding element 61 is converted into the lateral retracting and projecting movement of the locking index 42, and the linkage is strong. The first driven element 414 is connected to between the follower 413 and the guiding element 61. The first driven element 414 is preferably a steel rope. The steel rope has high strength, durability and reliability, so as to enhance the stability and reliability of the unlocking mechanism 41. In practical application, with the above configurations, the user can press the first unlocking button 411 with the natural force of his fingers while maintaining the posture of holding the upper rim frame 2, so that the first unlocking button 411 is moved with respective to the fixing element 412, driving the first guiding surface 4111 to move upwards with respective to the sliding slot 4121, thereby driving the follower 413 to move in the sliding slot 4121, so as to pull the first driven element 414 to move upwards between the upper rim frame 2 and the lower frames 3. The first driven element 414 drives the guiding element 61 to move upwards with respective to the lower rim frame 3, and in the course of the guiding element 61 moving upwards, the locking index 42 is guided, by the guiding part 611, to retract towards the lower rim frame 3, thereby it causes the locking index 42 to disengage from the positioning slot 51 with which it is engaged. At this time, the user lifts the main body 1 and moves it up and down, to re-adjust the installation height of the main body 1. In this embodiment, the overall structure of the unlocking mechanism 41 is simple and ingenious, safe and reliable, and is conducive to production implementation and sales promotion.

Preferably, a second restoring element 415 is provided within the first accommodation cavity 4112, the second restoring element 415 is connected between the first unlocking button 411 and the fixing element 412, and is for moving the first unlocking button 411 downward with respect to the fixing element 412 and restore the first unlocking button 411 to its initial position. As shown in Figure 6, in this embodiment, a second restoring element 415 is connected between the bottom of the fixing element 412 and the inner bottom wall of the first unlocking button 411, so as to drive the first unlocking button 411 to move downwards to restore its initial position. The second restoring element 415 is preferably a spring, which is easy to obtain and with low production cost.

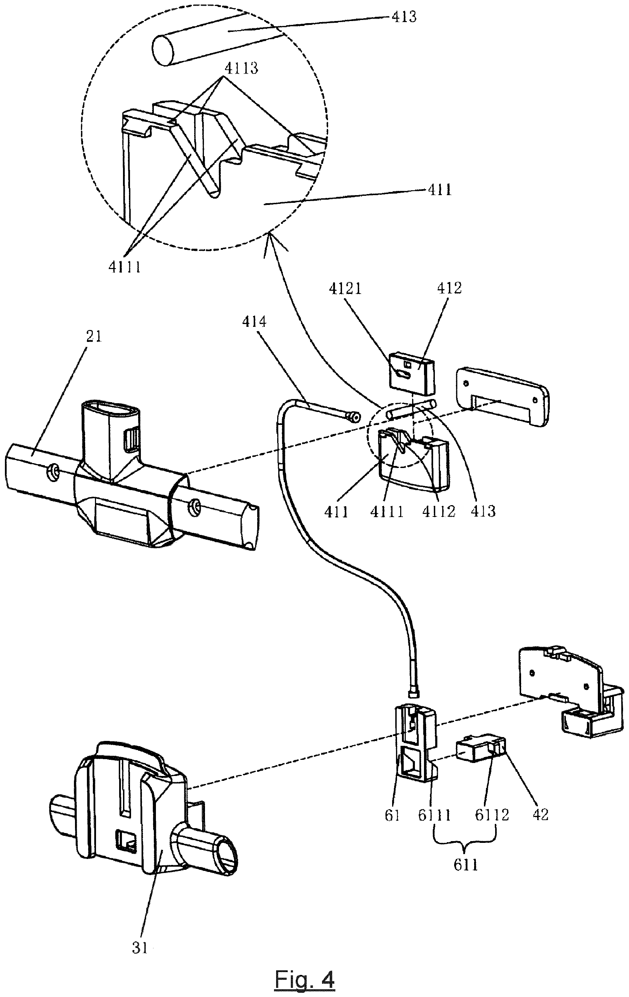

Preferably, both sides of the opening are provided with positioning ribs 4113 respectively, and the fixing element 412 is fixed between the two positioning ribs. As shown in Figure 4, in this embodiment, positioning ribs 4113 are provided on both front and rear sides of the top opening of the first unlocking button 411. The two positioning ribs 4113 are used to reinforce the fixing element 412, so as to enhance the connection stability of the fixing element 412, and thereby enhance the structural stability and reliability of the unlocking linkage assembly.

### Second embodiment:

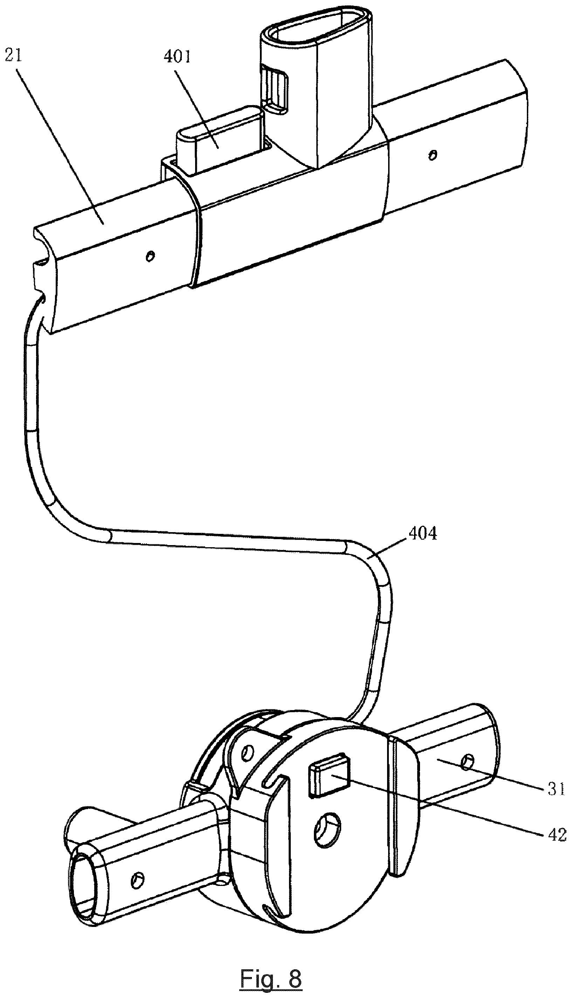

As shown in Figures 8-10, the differences between this embodiment and the first embodiment above is that the unlocking linkage assembly comprises a second unlocking button 401 movably connected to the upper part of the upper rim frame 2, a roller 402 provided on one side of the second unlocking button 401, a fixed bracket 403, and the second driven element 404. The second unlocking button 401 is provided within the fixed bracket 403 in a liftable manner, and the roller 402 is rotatably disposed in the fixed bracket 403. The guide assembly comprises a second guiding part 405 provided on the locking index 42, one end of the second driven element 404 is wound around the roller 402 and is connected to the second unlocking button 401, and the other end is wound around the second guiding part 405 and is connected to the lower rim frame 3. Further, a limitation part 406 is provided within the fixed bracket 403, and the limitation part 406 is for limiting the distance of the second unlocking button 401 moving upwards and downwards, with respect to the upper rim frame 2; the lower part of the second unlocking button 401 is connected with a third restoring element 407, and the third restoring element 407 is for restoring the second unlock button 401 to its initial position. In this embodiment, the upper rim frame 2 and the lower rim frame 3 can also be provided with the first connecting bracket 21 and the second connecting bracket 31 to provide sufficient installation space for the unlocking linkage assembly, guiding assembly, and lockingindex42. Specifically, the fixed bracket403 is provided on the outside of the first connecting bracket 21, the second unlocking button 401 is provided on the fixed bracket 403 in a liftable manner and is retractably disposed on the top of the first connecting bracket 21, the roller 402 is rotatably provided within the fixed bracket 403 and is located on one side of the second unlocking button 401. The locking index 42 is provided with a second guiding part 405 that communicates with the outside. Preferably, the second guiding part 405 is configured as a arc-shaped guiding channel. One end of the second driven element 404 is wound around the roller 402 and fixedly connected to the second unlocking button 401, and the other end is wound along the arc-shaped guiding channel and fixedly connected within the second connecting bracket 31, thereby guiding the locking index 42 to retract towards the second connecting bracket 31. The second driven element 404 is preferably a steel rope; the steel rope is high in strength, durable and reliable. In practical applications, the user can press the second unlocking button 401 with the palm while holding the upper rim frame 2, so that the second unlocking button 401 is moved downwards with respective to the fixed bracket 403, so as to pull one end of the second driven element 404 to move around the roller 402, and the direction of the pulling force of the second driven element 404 is changed through the roller402, so that the second driven element 404 is tightened in the second guide part 405, and the locking index 42 is guided and retracted into the inside of the second connecting bracket 31 via the second guiding part 405, so that the locking index 42 is disengaged from the engaged positioning slot 51. In this embodiment, the structures of the unlocking linkage assembly and the guiding assembly are further optimized, which facilitates production and assembly and reduces production costs.

In one variant, the roller 42 can be replaced by at least one fixed guide element attached to or formed in the fixed bracket 403.

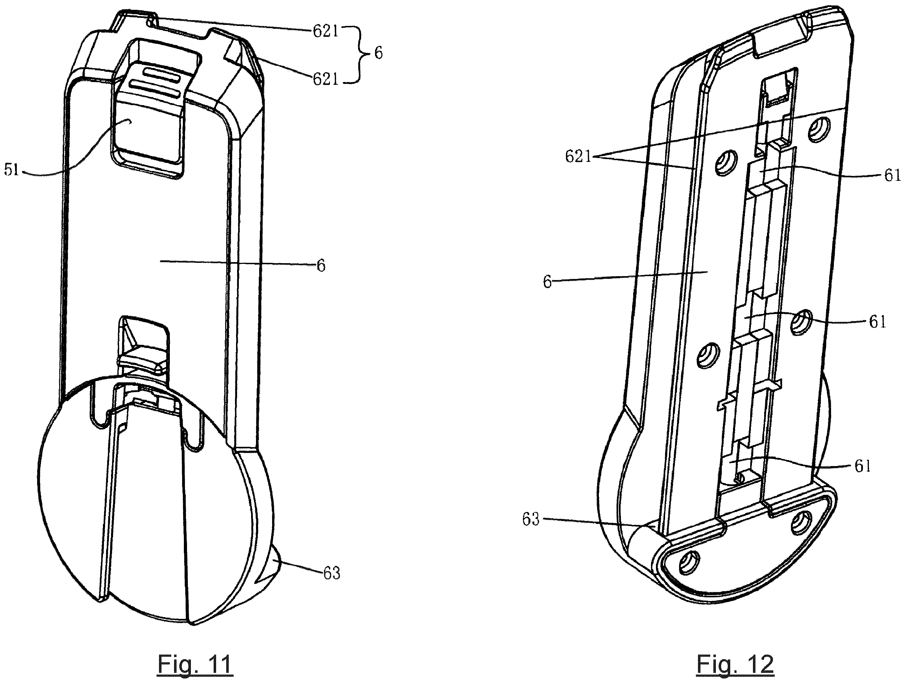

As shown in Figures 11, 12, and 13,the locking device 6 includes a plurality of locking pieces arranged at intervals along the height direction and adapted to the locking index 42. When the locking index 42 is engaged with any positioning groove, or slot, 61, the main body 1 is fixed at a height corresponding to the engaged positioning groove 61. The button 51 is used to move the locking index 42 away from the corresponding engaged positioning groove 61. The locking index 42 can move up and down relative to the locking device 6 and re-engage with any positioning groove 61. Furthermore, the locking member 52 is connected to a first return means 43, which is used to make the locking member 52 extend out and engage with the positioning groove 61.

### Predetermined position for disassembly

In a particular embodiment, the canopy can be separated from the frame in only one predetermined position (or in several predetermined positions, but not all). More precisely, it is desirable that the canopy can then be placed on the ground, or more generally on a flat surface, without the height adjustment means interfering therewith. In a particular embodiment, therefore, the invention provides for the height adjustment means to be returned to a lower position of the canopy relative to the stroller frame, or in other words to be raised relative to the lower part of the canopy.

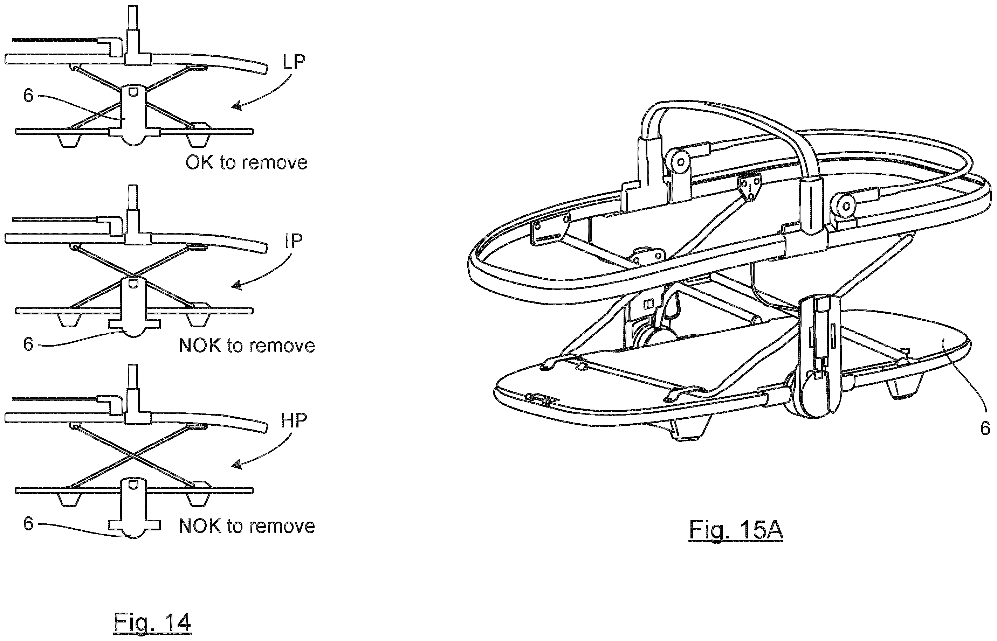

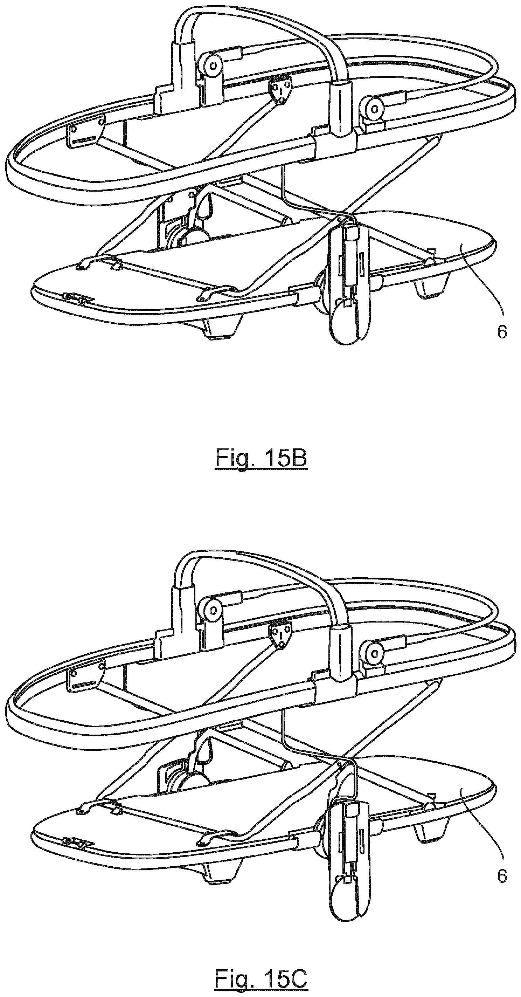

This is illustrated in Figure 14 and Figures 15Ato 15C, in an example where three heights are available. In the low position LP (Figure 15A), the height adjustment means 6 are raised, and feet 81 can rest on the floor. However, in the intermediate position IP (Figure 15B) and in the high position HP (Figure 15C), the height adjustment means 6 would come into contact with the ground, and the canopy would tilt around them.

To avoid this inconvenience, the invention proposes to implement means that prohibit removal in the unsuitable positions IP and HP ("NOK to remove") and allow it in the LP position ("OK to remove").

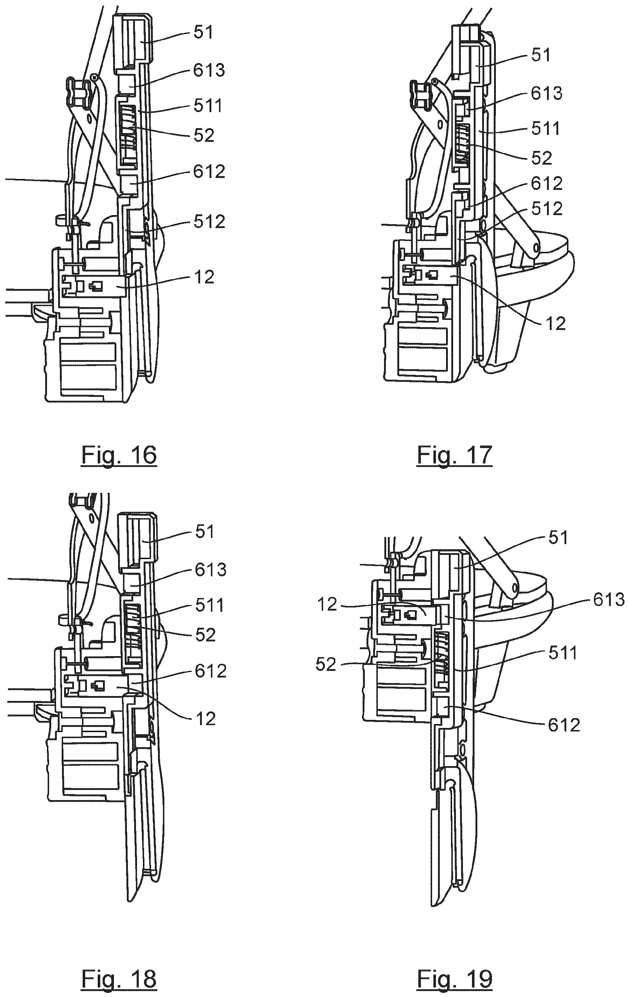

An example of this approach is shown in Figures 16 to 19. According to this example, the removal button 51 is extended by a plate 511, comprising two slots 612 and 613 corresponding respectively to positions IP (Figure 18) and HP (Figure 19). These slots are formed in the main body of the height adjustment means 6 and in the plate 311.The housing formed in this plate 511 comes into abutment with the index element 12, and it is understood that this prevents any movement of the button 51: pressing on it causes no movement, since the edge of the slot in the plate is in abutment with the index element. It is therefore not possible to remove the canopy from the chassis in these IP and HP positions. On the other hand, in the LP position shown in Figure 16, the 511 plate has no housing element for the index element 12, which is housed only in a slot 613 formed in the main body. It is therefore possible to press the button 51 and move it, so that the plate 511 which extends it, downwards, as shown in Figure 17.

The lower part of plate 511 ends in a blade 512 which, when button 51 is pressed, pushes index element 12 into a retracted position, allowing disassembly of the canopy from the frame. A ramp can be provided to help guide the index element.

A return means, e.g. a spring, 52 returns the button 51 to the locked position shown in figure 16, as soon as the button is released.

### Folding

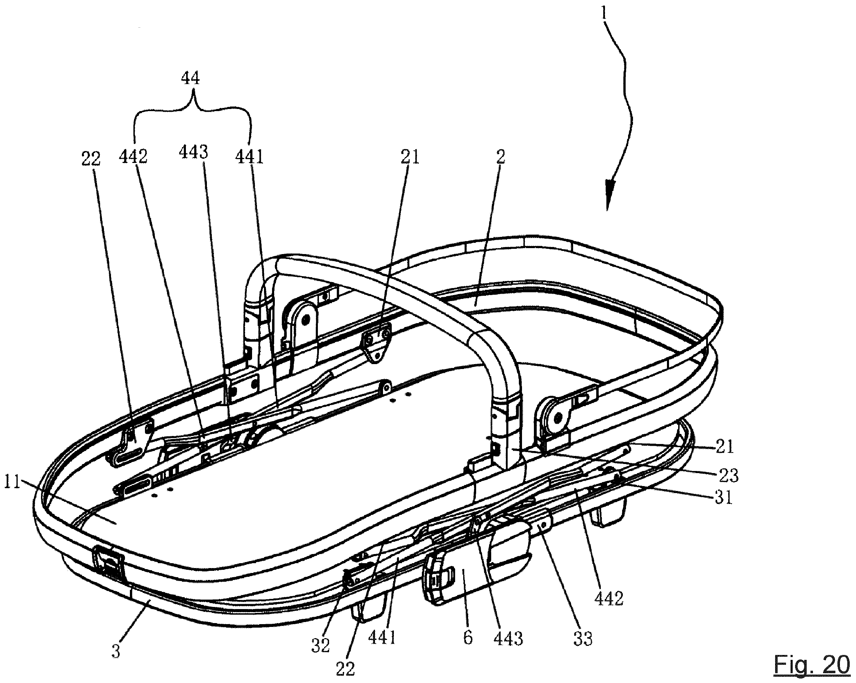

As shown in Figure 20, the canopy can be folded, with connecting elements 44 (441, 442, 443) linking the two rim frames 2 and 3 and allowing them to be brought together in a folded position. Means for detecting the presence of a child can be provided, to prevent folding in this case. Advantageously, the height adjustment means 6 are rotatable, so as to align with the lower rim frame to reduce bulk.

## Claims

1. A device (1) for carrying a child in a lying or seated position, which can be selectively mounted on a stroller frame and set over a planar surface, comprising a main body for receiving a child and first securing means (4) able to cooperate with complementary second securing means mounted or formed on said frame,
**characterised in that** it comprises height adjustment means (5) for adjusting the height of the position of said first securing means(4) with respect to a lower surface of said receiving element, between two extreme height positions, so-called high position and low position.

2. The device according to claim 1, **characterised in that** said first and second securing means can be assembled and/or disassembled only in at least one predetermined position of said first securing means.

3. The device according to claim 2, **characterised in that** said predetermined position(s) is/are such that, when the device is set on a planar surface, said first securing means does not interfere with said planar surface.

4. The device according to claim 3, **characterised in that** said predetermined position is said low position.

5. The device according to any one of claims 1 to 4, **characterised in that** each of said height adjustment means comprises two complementary elements for locking in one of said height positions, a first locking element being fixed with respect to said lower surface and a second locking element being slidably mounted relative to said first locking element.

6. The device according to claim 5, **characterised in that** said second locking element comprises a plurality of recesses, corresponding to each of said height positions, and **in that** said first locking elements comprises an index element, cooperating with one of said recesses depending on the selected height position.

7. The device according to claim 6, **characterised in that** it comprises and at least one unlocking actuator able to control the release of said index element.

8. The device according to claim 8, **characterised in that** said unlocking actuator(s) is/are connected to each index element by a transmission cable.

9. The device according to any one of claims 1 to 8, **characterised in that** each of said locking elements comprises a release button, which can assume a release position, allowing the device to be removed from the frame, and a rest position, in which said index element is accommodated in one of said recesses.

10. The device according to claims 2 and 9, **characterised in that** said release button can take on said release position only when said first securing means are in said predetermined position(s).

11. The device according to claims 5 and 10, **characterised in that** said release button is formed on the upper part second locking element, with return means tending to return it to its rest position.

12. The device according to claim 11, **characterised in that** said button is extended by a plate having a plurality of positioning slots adapted to receive said locking index, cooperating with a rib of said second element to prevent displacement of the release button when said first securing means are not in said predetermined position(s), said plate not extending opposite said locking index in said predetermined position(s).

13. The device according to any one of claims 1 to 12, **characterised in that** said element for receiving a child is foldable, and **in that** said first securing means are movable in rotation so as to substantially align with said receiving element in its folded state.

14. The device according to any one of claims 1 to 13, **characterised in that** it belongs to the group comprising nacelles, chairs, hammocks, shells and seats for children, which can be secured to a stroller frame.

15. The device according to any one of claims 1 to 14, **characterized in that** the main body (1) comprises a first securing element (5), the first securing element (5) connecting with a second securing element the frame, and the first securing element (5) comprising height adjustment means (4) connected to the locking part of the first securing element (5) in a liftable manner,
the height adjustment means (4) comprising an unlocking actuator (41) and a locking index (42), the first securing element (5) comprising a plurality positioning slots (51) which are spaced apart along the height direction and are (respectively) matched with the locking index (42), so that when the locking index (42) is engaged with a positioning slot (51), the main body (1) is secured at the corresponding height of the engaged positioning slot (51), the unlocking actuator (41) being able to move the locking index (42) away from the corresponding engaged positioning slot (51), the locking index (42) being moved upwards and downwards with respect to the locking part of the first securing element (5), and being re-engaged with any positioning slots (51).

16. The device according to claims 15, **characterized in that** the locking index (42) is connected to a first return means (43), making the locking index (42) project out of the main body (1) and be engaged with (one of) the positioning slot (51).

17. The device according to any one of claims 15 to 16, **characterized in that** the main body (1) further comprises an upper rim frame (2) and a lower rim frame (3), the unlocking actuator (41) being arranged between the upper rim frame (2) and the lower rim frame (3), the locking index (42) being retractably connected to (the complementary second securing means mounted or formed on) the lower rim frame (3).

18. The device according to any one of claims 15 to 17, **characterized in that** the unlocking actuator (41) comprises an unlocking linkage assembly disposed on the upper rim frame (2), and a guiding assembly disposed on the lower rim frame (3), the locking index (42) being connected to the guiding assembly, and the guiding assembly being driven by the unlocking linkage assembly, so that the locking index (42) can be retracted inwards with respect to the lower rim frame (3), and the locking element (42) is thus disengaged from the corresponding engaged positioning slot (51).

19. The device according to any one of claims 17 to 18, **characterized in that** the unlocking assembly comprises an unlocking button (411) movably connected to (the lower part) of the upper rim frame (2), and a fixing element (412) connected to the first unlocking button (411), the first unlocking button (411) being provided with a first guiding surface (4111) directed upwards, and the fixing element (412) being provided with a sliding slot (4121) located above the first guiding surface (4111), and a follower (413) being movably connected within the sliding slot (4121), and both sides of the follower (413) being on the first guiding surface (4111), the guide assembly comprising a guiding element (61) provided within the lower rim frame (3), and a first driven element (414) being connected between the follower (413) and the guiding element (61),a first guiding part (611) being provided between the guiding element (61) and the locking index (42),
the first unlocking button (411) moving upward with respect to the fixing element (412) to drive the first guiding surface (4111) to move upwards with respect to the sliding slot (4121), and to guide the follower (413), via the first guiding surface (4111), to moves within the sliding slot (4121), so that the follower (413) pulls the first driven element (414) to drive the guiding element (61) to move upwards with respect to the locking index (42), and thus the locking index (42), guided via the first guiding part (611), to be retracted with respect to the lower rim frame (3).

20. The device according to claim 19, **characterized in that** the first unlocking button (411) is provided with a first accommodation cavity (4112) with an opening on the top, and the fixing element (412) extending into the first accommodation cavity (4112) through the opening, so that the sliding slot (4121) is being near and above the first guiding surface (4111).

21. The device according to claim 20, **characterized in that** a restoring element (415) is provided within the first accommodation cavity (4112), the restoring element (415) being connected between the first unlocking button (411) and the fixing element (412), for moving the first unlocking button (411) downward with respect to the fixing element (412) and restore the first unlocking button (411) to its initial position.

22. The device according to claim 20, **characterized in that** both sides of the opening are provided with positioning ribs (4113) respectively, and the fixing element (412) is fixed between the two positioning ribs.

23. The device according to claim 18, **characterized in that** the unlocking linkage assembly comprises an unlocking button (401) movably connected to the upper part of the upper rim frame (2), a roller (402) provided on one side of the unlock button (401), a fixed bracket (403), and the second follower (404), the unlocking button (401) being provided within the fixed bracket (403) in a liftable manner, the roller (402) is rotatably disposed in the fixed bracket (403), the guide assembly comprising a second guide part (405) provided on the locking element (42), one end of the second follower (404) being wound around the roller (402) and is connected to the second unlock button (401), and the other end being wound around the second guide part (405) and connected to the lower rim frame (3).

24. The device according to claim 23, **characterized in that** a limitation portion (406) is provided within the fixed bracket (403), and the limitation portion (406) limiting the distance of the unlocking button (401) moving upwards and downwards, with respect to the upper rim frame (2), the lower part of the unlocking button (401) being connected with a third restoring element (407), and the third restoring element (407) being for restoring the unlock button (401) to its initial position.
